# EUROPÄISCHE PATENTSCHRIFT

(11) **EP 0 667 283 B1**
(45) Veröffentlichungstag und Bekanntmachung des Hinweises auf die Patenterteilung: **21.01.1998**
(21) Anmeldenummer: 94927134.0
(22) Anmeldetag: 02.09.1994
(51) Int. Cl.: B64C 29/00, B64C 27/22

(54) **KOMBINATIONS-LUFTFAHRZEUG**
HYBRID AIRCRAFT
AVION HYBRIDE

(30) Priorität: 07.09.1993 RU 93043825
(43) Veröffentlichungstag der Anmeldung: 16.08.1995
(73) Patentinhaber: TOVARISCHESTVO S OGRANICHENNOI OTVETSTVENNOSTJU KOM PANIA "INALET", Moscow, 123481 (RU)
(72) Erfinder: KAPIN, Viktor Mikhailovich, Moscow, 123459 (RU); IVCHIN, Valeriy Andreevich, Moscow, 123481 (RU); PAVLENKO, Nikolai Serathimovich, Moscow, 127591 (RU); POGREBINSKY, Evgeny Lvovich, Moscow, 1292247 (RU); SUBBOTIN, Viktor Vladimirovich, Moscow, 123242 (RU); MAJOROV, Oleg Nikolaevich, Moscow, 127560 (RU)
(74) Vertreter: Sparing - Röhl - Henseler Patentanwälte
(86) Internationale Anmeldenummer: RU9400207
(87) Internationale Veröffentlichungsnummer: WO9507215

(56) Entgegenhaltungen:
- FR-A- 2 303 709
- US-A- 2 988 301
- US-A- 3 002 709
- US-A- 3 221 831
- US-A- 3 559 921
- US-A- 3 689 011
- US-A- 3 938 761
- US-A- 4 298 175
- US-A- 5 152 478

## Beschreibung

### Technisches Gebiet

Die Erfindung betrifft den Flugzeugbau und kann als Luftfahrzeug mit Senkrechtstart und Senkrechtlandung unterschiedlicher Zweckbestimmung angewandt werden: als Passagier-, Fracht-, Fracht- und Passagierluftfahrzeug, als Sanitäts- und anderen Spezialluftfahrzeugen.

### Zugrundeliegender Stand der Technik

Luftfahrzeuge mit Senkrechtstart und Senkrechtlandung gehören zu den perspektivischen Entwicklungsrichtungen der Flugtechnik, weil sie auf nicht vorbereiteten Landeplätzen betrieben werden können. Besonders ansprechend sind solche Luftfahrzeuge für Spezialflüge und lokale Inlandsfluglinien. Es gibt mehrere Typen von Luftfahrzeugen mit Senkrechtstart und Senkrechtlandung.

Bekannt sind Luftfahrzeuge für Senkrechtstart und Senkrechtlandung, bei denen der Auftrieb bei Start und Landung durch Rückstoßkraft eines Hochgeschwindigkeitsstrahls erZeugt wird. Beispielsweise enthält das in der DE-PS 1246422, Kl. B60V 3/08 /NPK: 62b-60/ aus dem Jahre 1967 beschriebene Luftfahrzeug einen zylindrischen Rumpf mit Tragflügeln und Leitwerk, unter den Tragflügeln befindliche Triebwerksanlagen für Horizontalflug und Triebwerksanlagen für Start und Landung. Die Triebwerksanlagen für Start und Landung sind in Beulen im Mittelteil des Rumpfes angeordnet. Ein Nachteil dieser Anordnung liegt im hohen Kraftstoffverbrauch bei Start und Landung sowie im komplizierten Aufbau des Luftfahrzeuges, da zusätzliche Motoren in den Triebwerksanlagen für Senkrechtstart und Senkrechtlandung vorgesehen werden müssen. Außerdem übt der Hochgeschwindigkeitsstrahl bei Start und Landung die stärkste Einwirkung auf die Oberfläche des Landeplatzes aus, was den Betrieb der Luftfahrzeuge dieses Typs auf unbefestigten Plätzen unmöglich macht.

Es ist ein Kombinations-Luftfahrzeug für Senkrechtstart und Senkrechtlandung bekannt, das eine Kombination von Hubschrauber und Flugzeug darstellt und in der US-PS Nr. Re 29023, Kl. 244-6 aus dem Jahre 1976 beschrieben ist. Das Luftfahrzeug besitzt einen Rumpf mit einem hochangesetzten Tragflügel und mit Vertikalflossen an den Tragflügelenden. Der Tragflügel ist mit einem halbrunden Aussdhnitt an der Hinterkante ausgeführt. Über dem Rumpfheck ist eine Tragschraube angebracht, deren Rotationsebene mit der Horizontalebene des Tragflügels zusammenfällt. Das Luftfahrzeug ist auch mit Triebwerksanlagen für Horizontalflug ausgestattet.

Das Vorhandensein einer offenen Tragschraube verschlechtert wesentlich die Aerodynamik des Luftfahrzeugs im horizontalen Reiseflug. Außerdem sind die Tragschraube und ihre Transmission so bemessen, daß sich die Tragschraube stets über dem Rumpf oder einer anderen Stützkonstruktion befindet, was die Luftfahrzeugcharakteristiken bei Start und Landung wegen der Queranblasung des Rumpfes verschlechtert.

Bekannt sind Kombinations-Luftfahrzeuge, bei denen der Auftrieb bei Start und Landung und der Schub im Horizontalflug durch ein und dieselbe Einrichtung - eine Schwenkluftschraube - erzeugt werden. Ein derartiges Luftfahrzeug ist in der GB-PS Nr. 1405737, Kl. B7W aus dem Jahre 1975 beschrieben. Das bekannte Luftfahrzeug enthält einen Rumpf mit Tragflügeln und Leitwerk. Die Tragflügel sind schwenkbar ausgebildet, und die Triebwerksanlagen mit Luftschrauben sind an dem schwenkbaren Teil der Tragflügel angebracht. Ein und dieselben Luftschrauben werden sowohl zur Auftriebserzeugung bei Start und Landung als auch zur Erzeugung der Vortriebskraft beim Horizontalflug verwendet. Die Bauweise mit dem schwenkbaren Tragflügel weist Vorteile gegenüber der offenen Hubschraube auf, sie wurde von vielen Konstrukteuren durchgearbeitet und in realen Flugapparaten verwirklicht. Der Einsatz ein und derselben Luftschraube sowohl für Senkrechtstart und -landung als auch für Horizontalflug stellt jedoch harte Anforderungen an diese Schraube. Die Schwenkluftschraube kann einen ebensolchen Durchmesser wie die Tragschraube eines Hubschraubers nicht haben, und daher ist die spezifische Belastung der Luftschraube bei Start und Landung höher als bei einem Hubschrauber. Folglich ist eine größere Leistung der Motoren erforderlich. Die erhöhte spezifische Belastung der Luftschraube beim Start führt zu erhöhten Strömungsgeschwindigkeiten unter der Luftschraube und zu einer starken Erosionswirkung des Strahls auf den Boden. Obwohl diese Wirkung kleiner ist als bei Senkrechtstart- und Senkrechtlandeflugzeugen, die den Abgasstrahl benutzen, wie dies in der DE-PS 1246422, B60V 3/08 der Fall ist, bleibt sie für die meisten unbefestigten Plätze zu hoch. Das Luftfahrzeug erzeugt ein starkes Schallfeld. Außerdem macht das Vorhandensein des Schwenkflügels mit der Motor-Luftschrauben-Gruppe die Konstruktion des Luftfahrzeugs kompliziert und setzt seine Zuverlässigkeit im ganzen herab. Sehr kompliziert für das Steuerungssystem ist der Übergang des Luftfahrzeugs vom Startzustand in den Horizontalflug und der umgekehrte Vorgang. Jeder zufällige Ausfall in dem Steuerungssystem kann zu einer ernstlichen Havarie führen.

Es sind Kombinations-Luftfahrzeuge für Senkrechtstart und Senkrechtlandung bekannt, bei denen die Hubschraube innerhalb des Luftfahrzeugkörpers untergebracht ist. Bei einem Luftfahrzeug, geschützt durch den UdSSR-Urheberschein Nr. 1550790, Kl. B64B 1/00 aus dem Jahre 1987, ist der Körper als symmetrische konvexe Scheibe (Torus) ausgebildet, mit welcher Tragflügel, Leitwerk und Kabine verbunden sind. In der Mitte der Scheibe ist ein vertikaler Tunnel vorhanden, in dem sich ein Zentralkörper und die Hubschraube befinden. Die Eintritts- und die Austrittsstrecke des Tunnels sind durch Drehklappen abgedeckt, die im Horizontalflugzustand geschlossen werden und eine glatte obere Fläche der Scheibe bilden. Im Startzustand werden die Drehklappen auf der oberen Fläche der Scheibe vertikal verschwenkt, und es wird der Luftzutritt in den vertikalen Tunnel freigegeben. Die Lufteinlauföffnung des vertikalen Tunnels ist durch Kanäle zwischen den Drehklappen gebildet. Der Ringraum der Scheibe ist mit einem leichten Gas ausgefüllt, welches eine Auftriebskraft erzeugt. Das Luftfahrzeug besitzt Marschluftschrauben an den Tragflügeln für den Horizontalflugzustand und ein Luftkissenfahrwerk. Das Vorhandensein von mit einem leichten Gas gefüllten Volumen gibt die Möglichkeit, die Auftriebskraft der Luftschraube zu vermindern und dadurch die Motorleistung herabzusetzen. Berechnungen zeigen, daß die aerostatische Kraft die Größe des erforderlichen Auftriebs der Luftschraube im Tunnel nur bei beträchtlichen Abmessungen und erheblicher Tragfähigkeit des Luftfahrzeuges (bei einem Durchmesser der Scheibe größer als 50 m) wesentlich beeinflußt. Für Luftfahrzeuge mit einem Startgewicht unter 50 Tonnen erweist sich der Auftriebsgewinn der Luftschraube als gering. Das Luftfahrzeug besitzt Drehklappen auf der oberen Fläche der Scheibe, die im Zustand des Startes und der Landung geöffnet sind. Diese Klappen haben einen großen aerodynamischen Widerstand in der anströmenden Luft, was besonders in Übergangszuständen in Erscheinung tritt, weil selbst bei einer geringen Öffnung der Klappen der aerodynamische Widerstand des Luftfahrzeuges drastisch zunimmt. Beim Übergang vom Horizontalflug zur Landung kann das Luftfahrzeug die Stabilität verlieren, noch bevor die Hubschraube auf Touren kommt. Das Luftfahrzeug weist niedrige aerodynamische Daten auf, da beim Hochtouren die Scheibe horizontal bleibt und keine Auftriebskraft erzeugt, wobei der gesamte Auftrieb durch die Tragflügel erzeugt wird. In Anbetracht der Abmessungen der Scheibe (der Durchmesser über 50 m) ergibt sich, daß der größte Teil der Oberfläche des Luftfahrzeuges sich an der Erzeugung der aerodynamischen Auftriebskraft nicht beteiligt.

Am nächsten kommt der angemeldeten Erfindung nach dem technischen Grundgehalt das Luftfahrzeug gemäß der GB-PS Nr. 1331655, Kl. B7W aus dem Jahre 1973. Das Luftfahrzeug enthält einen Rumpf, der als dicker Auftriebsflügel in Form einer Scheibe mit abgeflachter Unterseite und unsymmetrischem Querschnittsprofil ausgebildet ist. Im Rumpf ist ein gekrümmter Tunnel mit offener Eintritts- und offener Austrittsöffnung vorgesehen, in welchem eine Hubschraube horizontal angeordnet ist. An der Unterfläche des Rumpfes ist eine Luftkissenlandevorrichtung angebracht, die den Austritt aus dem Tunnel umfaßt. Das Luftfahrzeug besitzt seitliche Tragflügel und ein Zweischeibenleitwerk. Für den Horizontalflug ist das Luftfahrzeug mit Marschluftschrauben und einer Schubdüse ausgerüstet. Die Hubschraube und die Marschluftschrauben werden von einer Gesamttriebwerksanlage in Rotation versetzt. Das Luftfahrzeug verfügt über einen der anströmenden Luft zugewandten offenen Lufteinlauf auf der Oberseite des zentralen Tragflügels, welcher Einlauf dem Tunnel Luft zuführt. Die Lufteinläufe der Triebwerksanlage befinden sich hinter dem Lufteinlauf des Tunnels und sind durch diesen beschattet.

Nachteilig bei die sein Luftfahrzeug ist ein erhöhter aerodynamischer Widerstand im Horizontalflugzustand, was mit dem Vorhandensein eines ständig arbeitenden Tunnellufteinlaufs zusammenhängt. Der erhöhte aerodynamische Widerstand steht dabei nicht nur damit in Verbindung, daß der Lufteinlauf in die anströmende Luft hinausragt, sondern auch damit, daß die von der Oberseite entnommene Luft praktisch senkrecht zur Unterfläche des Rumpfes abgeworfen wird, was ebenfalls einen zusätzlichen Widerstand gegen die anströmende Luft verursacht. Wie auch bei allen übrigen senkrechtstartenden und senkrechtlandenden Luftfahrzeugen eines solchen Typs sind in ihm die Charakteristiken der Hubschraube und der Luftkissenlandevorrichtung nicht aufeinander abgestimmt, was sie in eine einfache Gesamtheit von bekannten Einrichtungen verwandelt (Aggregierung).

### Offenbarung der Erfindung

Die Aufgabe der vorliegenden Erfindung besteht in der Schaffung eines Kombinations-Luftfahrzeuges, bei dem die Luftschraube und die Luftkissenlandevorrichtung optimal in Übereinstimmung gebracht sind. Eine andere Aufgabe der Erfindung ist es, die aerodynamischen Eigenschaften des Luftfahrzeuges im Horizontalflug zu verbessern. Eine dritte Aufgabe der Erfindung liegt darin, die Umströmung des auftriebserzeugenden Rumpfkörpers des Luftfahrzeugs durch die auftreffende Luft zu verbessern. Eine weitere Aufgabe der Erfindung ist, die Betriebssicherheit des Kombinations-Luftfahrzeuges zu erhöhen, darunter auch bei der Landung mit verminderter Leistung der Triebwerksanlage.

Zur Lösung der genannten Aufgaben ist das Kombinations-Luftfahrzeug, enthaltend einen Rumpf, der in Form eines dicken zentralen Tragflügels mit unsymmetrischem Querprofil mit einem eine Hubschraube aufnehmenden vertikalen Tunnel ausgeführt ist, seitliche Tragflügel und ein Leitwerk, Marschluftschrauben für Horizontalflug, eine Triebwerksanlage für den Antrieb der Marschluftschrauben und der Hubschraube und eine den Austritt aus dem Tunnel umfassende Luftkissenlandevorrichtung, erfindungsgemäß mit einem System zur Änderung der kollektiven und der zyklischen Steigung der Hubschraube versehen, wobei die Eintrittsöffnung des Tunnels durch eine Torusfläche gebildet ist, die mit der Oberseite des zentralen Tragflügels konjugiert ist, und wobei die Querschnittsfläche des vertikalen Tunnels in der Rotationsebene der Hubschraube 0,3 bis 0,8 vom Flächeninhalt des Luftkissens der Landevorrichtung ausmacht.

Dabei ist die Triebwerksanlage aus zwei Motorenblöcken, die im zentralen Tragflügel zu zwei Seiten des vertikalen Tunnels angeordnet sind, ausgeführt und besitzt zwei Marschluftschrauben, wobei die Hubschraube mit den beiden Motorenblöcken verbunden ist, während die Marschluftschrauben jeweils mit dem eigenen Motorenblock in Verbindung stehen.

Außerdem sind die Marschluftschrauben für Horizontalflug über der Oberseite des Heckteils des zentralen Tragflügels hinter der Linie der maximalen Profildicke des Heckteils des zentralen Tragflügels angeordnet.

Hierbei sind die Marschluftschrauben an Pylonen angebracht, die auf zwei Seiten in bezug auf den Tunnel angeordnet sind.

Außerdem ist das Luftfahrzeug mit zwei Längsbalken versehen, die über die Oberseite des Heckteils des zentralen Tragflügels hervorragen und auf zwei Seiten in bezug auf den Tunnel angeordnet sind, wobei das Leitwerk als zwei auf den Längsbalken angebrachte Kiele und eine die Kiele durchkreuzende Höhenflosse ausgeführt ist, während sich die Marschluftschrauben vor den Kielen befinden.

Das Wesen der Erfindung besteht darin, den vertikalen Tunnel mit der Hubschraube in die aerodynamische Komposition des Kombinations-Luftapparates im Horizontalflugzustand einzufügen und dabei eine Abstimmung der Kennlinien von Luftkissen und Hubschraube sicherzustellen, was die Flugsicherheit erhöht und die aerodynamischen Daten des Luftfahrzeuges verbessert, insbesondere seine aerodynamische Qualität steigert. Die Ausführung des Rumpfes des Luftfahrzeugs in Gestalt eines dicken zentralen Tragflügels mit unsymmetrischen Querprofil, der einen vertikalen Tunnel mit offener Eintritts- und offener Austrittsöffnung aufweist, in welchem die Eintrittsöffnung durch eine mit der Oberseite des zentralen Tragflügels stufenlos konjugierte Torusfläche gebildet ist, gewährleistet die Umströmung des zentralen Tragflügels im Bereich des Tunnels als zwei hintereinanderliegende Profile ähnlich einem ebenen Ringflügel. Dabei behindert die Beschattung des Tunnels durch die Hubschraube nichts die Einstellung von Umströmungsbedingungen ähnlich denen des Ringflügels, was gute aerodynamische Kennwerte des Luftfahrzeuges sicherstellt. Zur Verminderung der Beschattung des Tunnels durch die Hubschraube trägt auch die Wahl der Querschnittsfläche des Tunnels in der Rotationsebene der Hubschraube in Höhe von 0,3 bis 0,8 vom Flächeninhalt des Luftkissens der Landevorrichtung bei, während das Vorhandensein eines Steuerungssystems für die allgemeine und die zyklische Steigung der Hubschraube beim gewählten Flächenverhältnis einen sicheren Übergang von einem Betriebszustand zum anderen während des Fluges gewährleistet. Beim Start im Luftkissenregime hat die Tragschraube eine minimale Steigung und eine minimale Belastung der Schraubenkreisfläche. Eine Vergrößerung der Flughöhe beim Start wird erreicht durch Veränderung der allgemeinen Steigung der Hubschraube mit der Überführung des Luftfahrzeuges vom Luftkissenregime in den Zustand des Schwebens über naher Erdoberfläche unter Lageregelung des Luftfahrzeuges durch das System zur Änderung der allgemeinen und der zyklischen Steigung der Hubschraube. Die Drehzahlen der Triebwerksanlage verändern sich dabei praktisch nicht, und die Triebverksanlage arbeitet bei Nenndrehzahlen mit hoher Effektivität. Bei den gewählten Flächenverhältnissen gewährleistet das Luftkissen auch eine Dämpfung zufälliger Druckschwankungen im Tunnel hinter der Luftschraube, was die Stabilität der Arbeit der Hubschraube und des Luftfahrzeuges im ganzen erhöht.

Die Anordnung der Marschluftschrauben über der Oberseite des Heckteils des zentralen Tragflügels hinter der Linie der maximalen Dicken des aerodynamischen Profils begünstigt die Umströmung des Rumpfes im Ringflügel-Regime, weil die Luftschrauben das Anblasen der Oberseite des Heckteils des Tragflügels intensivieren. Bei versetzter Anordnung der Marschluftschrauben auf zwei Seiten bezüglich des Tunnels üben außerdem die Marschluftschrauben und die Hubschraube einen minimalen Einfluß aufeinander aus.

Die Ausführung der Triebwerksanlage in Form von zwei Motorenblöcken, die im Rumpf auf zwei Seiten bezüglich des Tunnels untergebracht sind, vereinfacht die Längstrimmung des Rumpfes, weil sich die Motoren näher zum Angriffspunkt des Auftriebs der Hubschraube im Tunnel befinden und symmetrisch in bezug auf die Längsachse des Luftfahrzeuges angeordnet sind. Der Anschluß der zwei Motorenblöcke an die Hubschraube und je eines von ihnen an jede der Marschluftschrauben erhöht die Zuverlässigkeit des Luftfahrzeuges, da der Ausfall eines der Motoren nicht zum Verlust der gesamten verfügbaren Leistung führt. Angewandt auf die vorliegende Erfindung liegt der Vorteil darin, daß bei dem gewählten Flächenverhältnis des Tunnels in der Rotationsebene und des Luftkissens der Landevorrichtung ein einziger Motorenblock ausreicht, um die Landung des Luftfahrzeuges auszuführen, denn der Übergang vom Horizontalflugzustand zur Standschwebe über dem Landeplatz kann im Schwebezustand über naher Erdoberfläche zustandegebracht werden, d.h. in einer hinreichenden Höhe, um Zeit für die Wahl einer Landestelle und für die Bewegung zu dieser im Zustand des Flugs über naher Erdoberfläche oder auf dem Luftkissen zu erhalten, wozu die Leistung nur eines Motorenblocks ausreichen wird.

Die Längsbalken, die über die Oberseite des Heckteils des zentralen Tragflügels hervorragen, verbessern die Aerodynamik desselben, indem Überströmungen an der Seitenkante des zentralen Tragflügels verringert werden. Dabei werden die Kiele und die Höhenflosse aus seinem Strömungsschatten herausgeführt. Die Anordnung der Marschluftschrauben vor den Kielen erhöht die Steuerbarkeit des Luftfahrzeuges bei niedrigen Fluggeschwindigkeiten.

### Kurze Beschreibung der Zeichnungen

Die Erfindung wird durch Zeichnungen erläutert, in denen es zeigt:

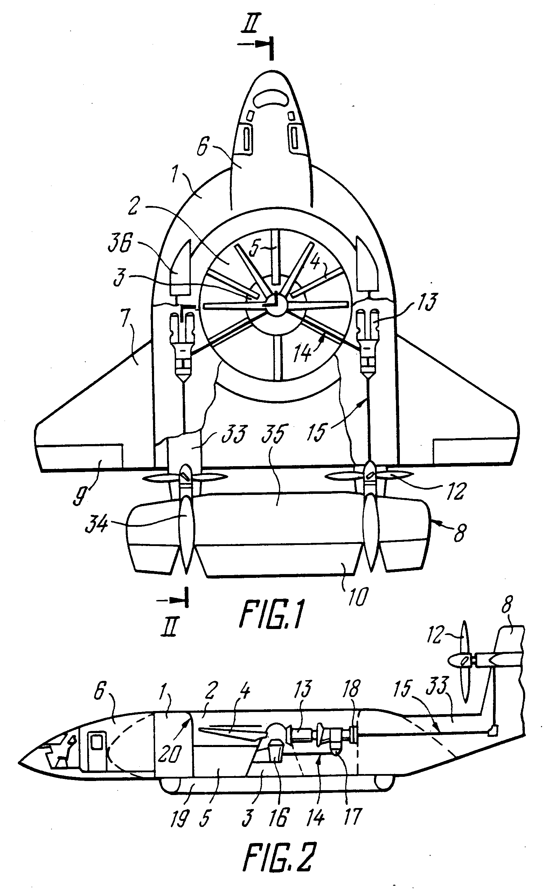

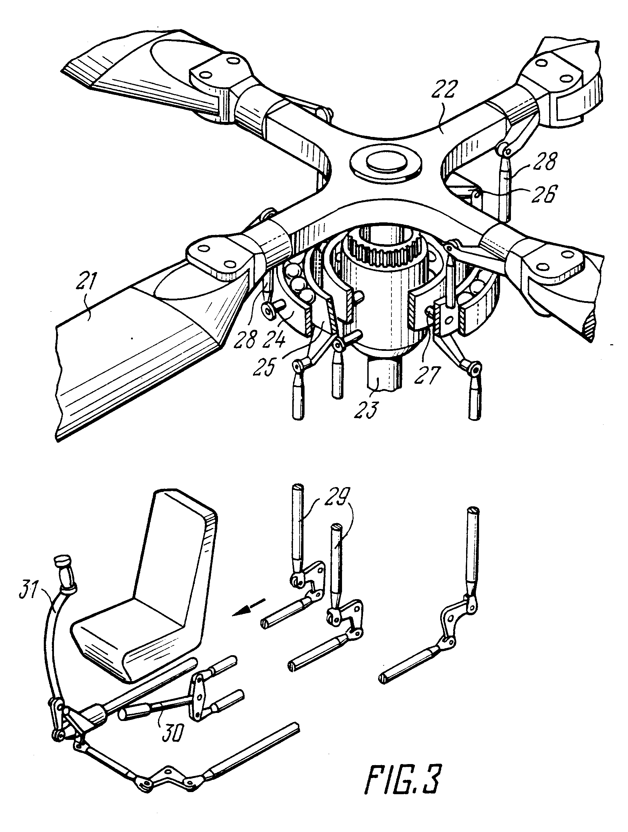

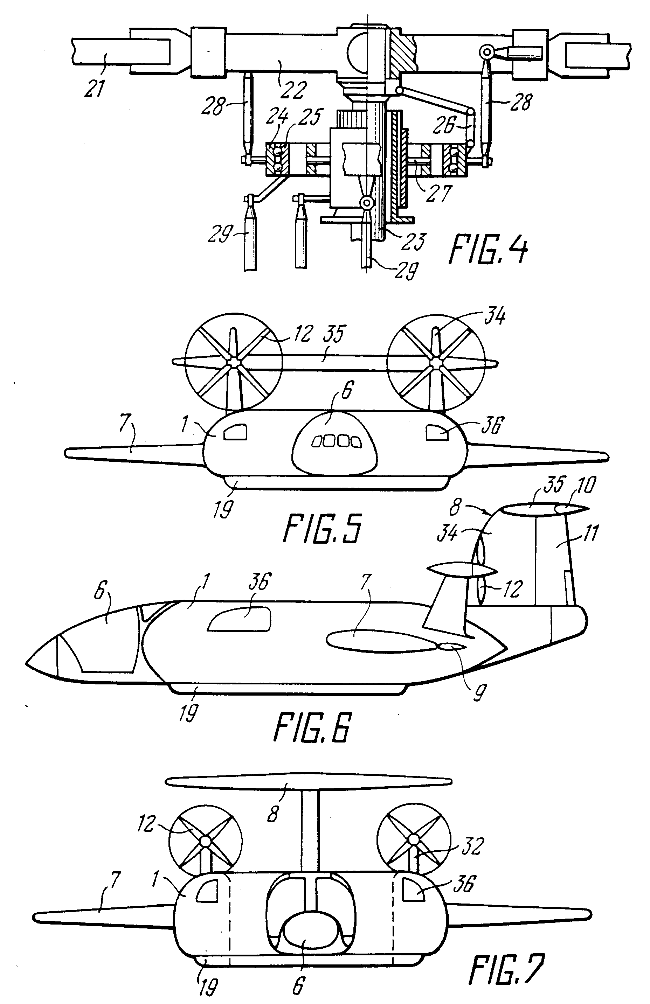

Fig. 1 die Gesamtgestaltung des Luftfahrzeuges, Draufsicht mit teilweise abgenommener Außenhaut der Oberseite des Rumpfes;
Fig. 2 den Längsschnitt des Luftfahrzeuges nach Linie A-A;
Fig. 3 und 4 das System zur Steuerung der allgemeinen und der zyklischen Steigung der Hubschraube, Axonometrie und Gesamtschema;
Fig. 5 die Vorderansicht des Luftfahrzeuges bei der Anordnung der Marschluftschrauben vor den Kielen;
Fig. 6 und 7 die Seitenansicht und die Vorderansicht des Luftfahrzeuges beim Anordnen der Marschluftschrauben an den Pylonen.

### Beste Ausführungsform der Erfindung

Das Kombinations-Luftfahrzeug enthält einen Rumpf 1, der in Form eines zentralen Tragflügels mit dickem unsymmetrischem Querschnitt, mit in der Planansicht bogenförmiger Vorderkante und geradliniger Hinterkante, stufenloser seitlicher Linienführung und abgeflachter Unterseite. Im Rumpf ist ein vertikaler Tunnel 2 mit abgerundeter Eintrittskante vorhanden. Der Tunnel runden Querschnitts nimmt in der Planansicht die Hauptfläche im Zentralteil des Rumpfes ein. Im Inneren des Tunnels ist ein stromlinienförmiger Zentralkörper 3 mit Hubschraube 4 untergebracht. Der Zentralkörper ist mit der Tunnelwandung durch radiale Pylone 5 verbunden. Das Luftfahrzeug besitzt eine Kabine 6 für die Aufnahme der Besatzung, von Passagieren und Frachten, seitliche Tragflügel 7 und ein Leitwerk 8. Die aerodynamischen Flächen des Luftfahrzeuges - die seitlichen Tragflügel und das Leitwerk - sind mit auslenkbaren Steuerorganen, beispielsweise mit Hilfsklappen 9 und 10 und Seitenrudern 11 ausgestattet. Für die Ausführung des Horizontalflugs ist das Luftfahrzeug mit zwei Marschluftschrauben 12 bestückt. Die Hubschraube 4 und die Marschluftschrauben 12 werden durch eine Triebwerksanlage in Rotation versetzt, die zwei Motorenblöcke 13 einschließt. Die Motorenblöcke 13 sind im Rumpf 1 auf zwei Seiten bezüglich des Tunnels 2 angeordnet. Die Motorenblöcke sind mittels Wellen 14 mit der Hubschraube und mittels Wellen 15 mit den Marschluftschrauben verbunden. Mit der Hubschraube sind die beiden Motorenblöcke verbunden, während jede Marschluftschraube mit dem ihr zugeordneten Motorenblock verbunden ist. Die Wellen 14 sind einerseits an ein Hubschraubengetriebe 16 und andererseits an eine Steuerkupplung 17 an den Motorenblöcken angeschlossen. Die Steuerkupplungen 17 können von einem beliebigen Typ sein: hydraulisch, mechanisch, elektromagnetisch. Die Welle 15 ist mit dem Motorenblock über eine Steuerkupplung 18 vorzugseise mit einem regelbaren Übersetzungverhältnis verbunden. Der Typ der Kupplungen 18 kann ebenfalls beliebig sein. Das Luftfahrzeug ist mit einer Luftkissenlandevorrichtung 19 ausgerüstet, die den Austritt aus dem vertikalen Tunnel umfaßt. Die Querschnittsfläche des Tunnels in der Rotationsebene der Hubschraube macht 0,3 bis 0,8 vom Flächeninhalt des Luftkissens der Landevorrichtung 19 aus. Im besonderen beträgt bei einem für 18 Insassen ausgelegten Luftfahrzeug die Luftkissenfläche der Landevorrichtung 58 m², während die Querschnittsfläche des vertikalen Tunnels in der Rotationsebene der Hubschraube 38 m² gleich ist. Die Eintrittsöffnung des Tunnels ist durch eine Torusfläche 20 gebildet, die mit der Oberseite des zentralen Tragflügels stufenlos konjugiert ist. Infolgedessen ergeben sich im Mittelteil des zentralen Tragflügels hintereinanderliegende dicke aerodynamische Profile, die in einem dem Ringflügel ähnlichen Regime umströmt werden, was die aerodynamischen Eigenschaften des Luftfahrzeuges im Horizontalflug verbessert.

Das Luftfahrzeug ist mit einem Sytem zur Änderung der kollektiven und der zyklischen Steigung der Hubschraube ausgestattet. Die Blätter 21 der Hubschraube sind an einem zentralen Kreuzstück 22 angelenkt, das an der Ausgangswelle 23 des Getriebes 16 befestigt ist. Die Hauptbaugruppe des Systems zur Änderung der kollektiven und der zyklischen Steigung der Hubschraube ist ein Schrägstellautomat, der einen Laufring 24, einen Festring 25, ein Schlitzgelenk 26 und eine Kardanaufhängung 27 enthält. Der Laufring 24 ist vermittels Mitnehmer 28 mit den Blättern 21 der Hubschraube verbunden. Der Festring und die Kardanaufhängung 27 sind mittels Zugstangen 29 mit Steuergriffen 30, 31 zur Steuerung der kollektiven Steigung der Hubschraube bzw. der zyklischen Steigung der Hubschraube verbunden.

Die Marschluftschrauben sind oberhalb der Oberseite des Heckteils des zentralen Tragflügels hinter der Linie der maximalen Profildicke des Heckteils des zentralen Tragflügels angebracht, die mit der Eintrittskante der durch eine Torusfläche gebildeten Eintrittsöffnung des Tunnels zusammenfällt. Die konkrete Zone der Anordnung der Marschluftschrauben wird durch Anblaseversuche bestimmt. Insbesondere plaziert man die Marschluftschrauben mit einer Versetzung zur Hinterkante des zentralen Tragflügels hin. In Abhängigkeit von den Abmessungen und der Tragfähigkeit des Luftfahrzeuges werden die Marschluftschrauben entweder an Pylonen 32 oder am Leitwerk angebracht. Die Pylone 32 sind auf zwei Seiten bezüglich des Tunnels 2 angeordnet.

Das-Luftfahrzeug mit den Marschluftschrauben am Leitwerk besitzt zwei Längsbalken 33, die über die Oberseite des Heckteils des zentralen Tragflügels hervorragen, zwei Kiele 34 und eine die Kiele durchkreuzende Höhenflosse 35. Die Marschluftschrauben sind vor den Kielen 34 angeordnet.

Die Lufteinläufe 36 der Triebwerksanlage befinden sich auf der Oberseite des zentralen Tragflügels.

Beim Start bringt man die Blätter 21 der Hubschraube 4 in die Stellung der maximalen Steigung und läßt die Triebwerksanlage bei abgeschalteten Wellen 15 des Antriebs der Marschluftschrauben 12 an. Man bringt die Hubschraube 4 auf Touren und drückt mit dieser die Luft in den Hohlraum der Luftkissenlandevorrichtung 19. Durch Betätigung des Steuergriffs 30 zur Steuerung der allgemeinen Steigung erhöht man den Luftkissendruck bis zum Abheben des Luftfahrzeuges vom Startplatz. Danach vergrößert man die kollektive Steigung der Hubschraube und führt das Luftfahrzeug in den Zustand des Schwebens über naher Erdoberfläche über. Man steuert das Luftfahrzeug im Schwebezustand unter Zuhilfenahme des Steuergriffs 31 zur Steuerung der zyklischen Steigung der Hubschraube und unter Benutzung des Schrägstellautomaten des Systems zur Änderung der kollektiven und der zyklischen Schraubensteigung. Bei der weiteren Vergrößerung der kollektiven Steigung wird der Auftrieb der Hubschraube 4 gleich oder größer als des Gewicht des Luftfahrzeuges, und dieses wird in einen Zustand übergeführt, bei dem seine Schwebefähigkeit in der Luft nur durch die Hubschraube 4 aufrechterhalten wird. Zur Beschleunigung des Luftfahrzeuges rückt man die Kupplungen 18 ein und beginnt, die Marschluftschrauben 12 hochzutouren. Der von den Marschluftschrauben 12 entwickelte Schub wächst allmählich an, und in der Anfangsstufe der Beschleunigung ist kein erheblicher Leistungsaufwand für den Antrieb der Marschluftschrauben erforderlich. Da der zentrale Tragflügel einen unsymmetrischen Querschnitt aufweist, wird der aerodynamische Auftrieb an ihm bei der Bewegung mit dem Nullanstellwinkel erzeugt. Ein zusätzlicher Auftrieb wird an den seitlichen Tragflügeln erzeugt, die unter einem optimalen Anstellwinkel angesetzt sind. Mit der Zunahme der Fluggeschwindigkeit wächst der aerodynamische Auftrieb an, und dementsprechend vermindert man die Auftriebskraft an der Tragschraube 4, indem man deren kollektive Steigung verändert. Die freiwerdende Leistung der Triebwerksanlage wird auf die Marschluftschrauben 12 übertragen. Nachdem der aerodynamische Auftrieb einen Wert erreicht hat, der dem Gewicht des Luftfahrzeuges gleich ist, schaltet man die Hubschraube 4 von der Triebwerksanlage ab, und das Luftfahrzeug fliegt flugzeugähnlich weiter. Beim Übergang zum flugzeugähnlichen Flug ist es nicht erforderlich, die Eintrittsöffnung des Tunnels zu schließen, weshalb die Abschaltung der Hubschraube 4 keine Änderung des aerodynamischen Widerstandes des Luftfahrzeugs hervorruft, was die Steuerung des Luftfahrzeuges vereinfacht und die Zuverlässigkeit desselben erhöht. Das Luftfahrzeug wird in der Luft durch die Auftriebskraft unterhalten, die durch die gesamte Oberfläche - durch den zentralen Tragflügel und die seitlichen Tragflügel - erzeugt wird, was die aerodynamischen Daten des Luftfahrzeuges verbessert. Das Luftfahrzeug besitzt keinen in die anströmende Luft hinausragenden Lufteinlauf des Tunnels, was den aerodynamischen Widerstand herabmindert und die aerodynamische Qualität des Luftfahrzeuges steigert. Beim Flug mit der Nenngeschwindigkeit steht die Hubsshraube still und die Luft strömt frei über den Tunnel 2, indem sie den Bug- und den Heckteil des zentralen Tragflügels in einer Art umströmt, die der Umströmung eines ebenen Ringflügels ähnlich ist.

Bei der Landung vermindert man die horizontale Fluggeschwindigkeit, und bei der Abnahme der aerodynamischen Auftriebskraft auf eine Größe kleiner als das Gewicht des Luftfahrzeuges rückt man die Kupplung 17 ein und bringt die Hubschraube 4 auf Touren bei der minimalen kollektiven Steigung. An der Triebwerksanlage ist eine Mehrleistung vorhanden, und das Hochtouren der Hubschraube ruft keine Verringerung des Horizontalschubs der Marschluftschrauben 12 hervor. Das Hochtouren der Hubschraube bewirkt auch keine wesentliche Änderung des aerodynamischen Widerstandes des Luftfahzeugs, weil die Eintrittsöffnung des Tunnels nicht geöffnet zu werden braucht. Je nach der Herabsetzung der horizontalen Fluggeschwindigkeit wird eine immer größere Leistung auf die Hubschraube übertragen, und das Luftfahrzeug geht in den von der Auftriebskraft der Hubschraube 4 herrührenden Schwebezustand über. Danach folgt die Senkrechtlandung des Luftfahrzeuges auf einen gewählten Landeplatz. Im Bedarfsfall schwebt das Luftfahrzeug über der Erdoberfläche oder über Wasser und bewegt sich dann zur Landestelle entweder im Zustand des Fluges über naher Erdoberfläche oder auf dem Luftkissen.

In Anbetracht dessen, daß zum Schweben des erfindungsgemäßen Luftfahrzeuges über naher Erdoberfläche eine Leistung erforderlich ist, welche die Hälfte der Gesamtleistung der Triebwerksanlage unterschreitet, kann das Luftfahrzeug notwendigenfalls mit nur einem Motorenblock 13 landen. In diesem Fall sinkt das Luftfahrzeug bis zu einer Höhe, in der sich der Bodeneffekt zeigt, und geht vom flugzeugähnlichen Horizontalflug in den Zustand des Schwebens über naher Erdoberfläche über. Auf ähnliche Weise kann der Start des Luftfahrzeuges in einer kritischen Situation erfolgen.

### Gewerbliche Verwertbarkeit

Die Möglichkeit zur Realisierung des Luftfshrzeugs nach der vorliegenden Erfindung ist durch Prüfungen eines Modells des beanspruchten Luftfahrzeuges bestätigt worden. Ein Luftfahrzeug in voller Größe kann unter Anwendung der modernen Technologie und der Materialien der Flugtechnik hergestellt werden.

## Patentansprüche

1. Kombinations-Luftfahrzeug, enthaltend einen Rumpf (1), der in Form eines dicken zentralen Tragflügels mit unsymmetrischem Querprofil ausgeführt ist, der einen Tunnel (2) mit einer offenen Eintritts- und einer offenen Austrittsöffnung besitzt, welcher eine Hubschraube (4) aufnimmt, seitliche Tragflügel (7) und ein Leitwerk (8), Marschluftschrauben (12), eine Triebwerksanlage für den Antrieb der Marschluftschrauben und der Hubschraube und eine Luftkissenlandevorrichtung (19), die den Austritt aus dem Tunnel umfaßt, dadurch **gekennzeichnet,** daß es mit einem System zur Änderung der kollektiven und der zyklischen Steigung der Blätter (21) der Hubschraube versehen ist, wobei die Querschnittsfläche des Tunnels in der Rotationsebene der Hubschraube 0,3 bis 0,8 vom Flächeninhalt des Luftkissens der Landevorrichtung ausmacht und wobei die Eintrittsöffnung des Tunnels durch eine Torusfläche (20) gebildet ist, die mit der Oberseite des zentralen Tragflügels konjugiert ist.

2. Kombinations-Luftfahrzeug nach Anspruch 1, dadurch **gekennzeichnet,** daß die Triebwerksanlage aus zwei Motorenblöcken (13) ausgeführt ist, die sich auf zwei Seiten bezüglich des Tunnels (2) befinden, und daß zwei Marschluftschrauben (12) vorgesehen sind, wobei die Hubschraube (4) mit den beiden Motorenblöcken verbunden ist, während jede Marschluftschraube (12) mit dem eigenen Motorenblock in Verbindung steht.

3. Kombinations-Luftfahrzeug nach den Ansprüchen 1 und 2, dadurch **gekennzeichnet,** daß die Marschluftschrauben (12) über der Oberseite des Heckteils des zentralen Tragflügels hinter der Linie der maximalen Profildicke des Heckteils des zentralen Tragflügels angeordnet sind.

4. Kombinations-Luftfahrzeug nach den Ansprüchen 1 bis 3, dadurch **gekennzeichnet,** daß die Marschluftschrauben (12) an Pylonen (32) angebracht sind, die auf zwei Seiten bezüglich des Tunnels angeordnet sind.

5. Kombinations-Luftfahrzeug nach den Ansprüchen 1 bis 3, dadurch **gekennzeichnet,** daß es mit zwei Längsbalken (33) versehen ist, die über die Oberseite des Heckteils des zentralen Tragflügels hervorragen und auf zwei Seiten bezüglich des Tunnels angeordnet sind, wobei das Leitwerk (8) als zwei auf den Längsbalken angebrachte Kiele (34) und eine die Kiele durchkreuzende Höhenflosse (35) ausgeführt ist, während sich die Marschluftschrauben (12) vor den Kielen befinden.

## Claims

1. A multi-function aircraft, comprising a fuselage (1) which is constructed as a wide, central carrying wing with an asymmetrical cross-section, which has a tunnel (2) with an open inlet and an open outlet, which holds a helicopter rotor (4), and comprising lateral carrying wings (7) and a tail unit (8), cruising propellers (12), a power-plant for driving the cruising propellers and the helicopter rotor and an air-cushion landing device (19) which encompasses the tunnel outlet, characterised in that the aircraft is equipped with a system for varying the collective and cyclic pitch (21) of the helicopter rotor, the cross-section face of the tunnel in the rotation plane of the helicopter rotor constituting 0.3 to 0.8 of the surface-content of the air-cushion of the landing device, and the tunnel inlet being formed by a torus face (20) which is conjugated with the upper side of the central carrying wing.

2. A multi-function aircraft according to claim 1, characterised in that the power-plant is constructed from two engine blocks (13) which are situated on each side of the tunnel (2) and in that two cruising propellers (12) are provided, the helicopter rotor (4) being connected to both engine blocks, while each cruising propeller (12) is connected to its own engine block.

3. A multi-function aircraft according to claims 1 and 2, characterised in that the cruising propellers (12) are arranged above the upper side of the rear part of the central carrying wing behind the line of the maximum cross-sectional width of the rear part of the central carrying wing.

4. A multi-function aircraft according to claims 1 to 3, characterised in that the cruising propellers (12) are mounted on pylons (32) which are arranged on each side of the tunnel.

5. A multi-function aircraft according to claims 1 to 3, characterised in that the aircraft has two longitudinal beams (33) which project over the upper side of the rear part of the central carrying wing and are arranged on each side of the tunnel, the horizontal stabiliser (8) being formed as two keels (34) attached to the longitudinal beams and a tailplane (35) intersecting the keels, while the cruising propellers (12) are situated in front of the keels.

## Revendications

1. Aéronef combiné qui contient : un fuselage (1) lequel est réalisé en forme d'une épaisse aile portante centrale à profil transversal asymétrique qui présente un tunnel (2) comportant un orifice d'admission ouvert et un orifice d'échappement ouvert et logeant un rotor (4), des ailes portantes latérales (7) et un empennage (8), des hélices de propulsion (12), un groupe motopropulseur pour l'entraînement des hélices (12) et du rotor et un dispositif d'atterrissage à coussin d'air (19) qui entoure l'échappement du tunnel, caractérisé en ce qu'il est muni d'un système permettant de modifier le pas collectif et le pas cyclique des pales 21 du rotor, la surface de la section transversale du tunnel dans le plan de rotation du rotor étant comprise entre 0,3 et 0,8 fois la surface du coussin d'air du dispositif d'atterrissage, tandis que l'orifice d'admission du tunnel est constitué par une face torique (20), laquelle est conjuguée à la face supérieure de l'aile portante centrale.

2. Aéronef combiné selon la revendication 1, caractérisé en ce que le groupe motopropulseur est composé de deux blocs moteurs (13) qui se trouvent sur deux côtés par rapport au tunnel (2), et en ce que deux hélices de propulsion (12) sont prévues, le rotor (4) étant relié aux deux blocs moteurs tandis que chaque hélice de propulsion (12) est reliée à son propre bloc moteur.

3. Aéronef combiné selon les revendications 1 et 2, caractérisé en ce que les hélices de propulsion (12) sont disposées au-dessus de la face supérieure de la partie arrière de l'aile portante centrale, derrière la ligne d'épaisseur maximale du profil de ladite partie arrière de l'aile portante centrale.

4. Aéronef combiné selon les revendications 1 à 3, caractérisé en ce que les hélices de propulsion (12) sont fixées sur des pylônes (32) qui sont disposés sur deux côtés par rapport au tunnel.

5. Aéronef combiné selon les revendications 1 à 3, caractérisé en ce qu'il est muni de longerons (33) qui font salle sur la face supérieure de la partie arrière de l'aile portante centrale et qui sont disposés sur deux côtés par rapport au tunnel, l'empennage (8) étant composé de deux quilles (34) fixées sur lesdits longerons et d'un plan stabilisateur (35) qui croise ces quilles, tandis que les hélices de propulsion (12) se trouvent à l'avant desdites quilles.
